# EUROPEAN PATENT SPECIFICATION

(11) **EP 2 511 074 B1**
(45) Date of publication and mention of the grant of the patent: **01.03.2017**
(21) Application number: 12164201.1
(22) Date of filing: 15.04.2012
(51) Int. Cl.: B29C 65/48, B29C 65/50, B29C 65/14

(54) **Method of sealing**
Dichtungsverfahren
Procédé d'étanchéité

(30) Priority: 15.04.2011 US 201161476048 P; 12.04.2012 US 201213445752
(43) Date of publication of application: 17.10.2012
(73) Proprietor: Covidien AG, 8212 Neuhausen am Rheinfall (CH)
(72) Inventor: Smith, Kevin W., Coral Gables, FL Florida 33156 (US); Deville, Derek Dee, Coral Gables, FL Florida 33156 (US); Rivera, Carlos, Cooper City, FL Florida 33330 (US); Kirk, Michael Walter, Miami, FL Florida 33155 (US); Bales, Thomas O., Coral Gables, FL Florida 33156 (US); Palmer, Matthew A., Miami, FL Florida 33156 (US)
(74) Representative: Soames, Candida Jane

(56) References cited:
- DE-A1-102005 047 511
- JP-A- 2005 347 002
- US-A- 5 732 743
- US-A1- 2011 292 623

## Description

The present invention lies in the field of sealing. The present disclosure relates to a method of sealing that uses a light curable adhesive to attach enclosure parts together.

### BACKGROUND OF THE INVENTION

Devices having a mechanical housing or enclosure are typically formed from two or more parts attached together to enclose therein mechanical or electrical components that allow the device to function. Various examples of different ways of attaching multi-part enclosures include:
using any combination of adhesives and mechanical attachment mechanisms, e.g., a-rings,tabs, latches, bolts;
forming an interference fit between parts, e.g., using friction between two parts to seal the parts together; and
welding parts together.

One particular example (disclosed in U.S. Provisional Patent Application Serial Nos. 61/376,983, filed on August 25, 2010, and 61/476,022, filed on April 15, 2011, hereby incorporated by reference in their entireties) uses ultrasonic welding to attach two housing sub-parts together. In this example, two halves of a battery assembly outer shell of a surgical device are ultrasonically welded together to provide a hermetic seal between the components within the battery assembly and the environment. The hermetic seal sufficiently isolates the interior of the battery assembly and the components disposed therein from a sterile field of an operating environment into which the device has been introduced so that no contaminants from one side of the seal are able to transfer to the other side of the seal. This seal is at least gas-tight, thereby preventing intrusion of air, water, vapor phase H₂O₂, etc. This gas-tight construction of the battery assembly allows it to be sterilized, for example, using low-temperature vapor phase Hydrogen Peroxide (H₂O₂) as performed by the sterilization devices manufactured by the Steris Corporation and referred to under the trade name V-PRO or manufactured by Advanced Sterilization Products (ASP), division of Ethicon, Inc., a Johnson & Johnson company, and referred to under the trade name STERRAD®.

Although the hermetic seal formed by the ultrasonic welding of the battery assembly described above advantageously allows sterilization of the battery assembly, maintenance of the hermetic seal, and thus preservation of the components housed within the battery assembly, could decrease over time. The combination of H₂O₂, cleaning chemicals, and disinfecting solution, all used during sterilization, puts stress on the hermetic seal and, therefore, the components within the battery assembly as well.

Thus, a need exists to overcome any potential for problems with the systems, designs, and processes as discussed above.

### SUMMARY OF THE INVENTION

The invention is defined by appended set of claims and provides a method of sealing that overcome the hereinafore-mentioned disadvantages of the heretofore-known devices and methods of this general type.

With the foregoing and other objects in view, there is provided, in accordance with the invention, a method for creating a seal, including the steps of providing a structure comprised of at least two adjacent parts forming an enclosure and having a contact surface therebetween, at least one part of the structure being comprised of a material that appears substantially opaque to the naked eye and is substantially transparent to light, applying a light-curable adhesive at the contact surface, and transmitting light to cure the light-curable adhesive to form a hermetic seal at the contact surface between the at least two adjacent parts,

With the foregoing and other objects in view, there is also provided a method for creating a seal including the steps of providing a structure comprised of at least first and second housing portions having first and second contact surfaces, respectively and a band comprised of a material that is substantially transparent to light, the band being disposed between the first and second housing portions at the first and second contact surfaces to form an enclosure together with the first and second housing portions, applying a light-curable adhesive at the first and second contact surfaces between the band and the first and second housing portions, and transmitting light to cure the light-curable adhesive to form a hermetic seal at the first and second contact surfaces between the band and the first and second housing portions.

With the objects of the invention in view, there is also provided a method for creating a seal, Including the steps of providing a multi-part structure comprised of adjacent parts that form an enclosure and have a contact surface therebetween, disposing at least one light source inside the enclosure, applying a light-curable adhesive at the contact surface, and powering the at least one light source to transmit light sufficient to cure the light-curable adhesive from inside the enclosure and, thereby, form a hermetic seal at the contact surface between the adjacent parts.

In accordance with another mode of the disclosure, the light cures the light-curable adhesive by being transmitted through the at least one part of the structure that is both substantially opaque to the naked eye and substantially transparent to light.

In accordance with a further mode of the disclosure, the at least one part of the structure that is both substantially opaque to the naked eye and substantially transparent to light is transparent to ultraviolet light, the light-curable adhesive is curable by ultraviolet light, and the transmitted light is ultraviolet light.

In accordance with an added mode of the disclosure, the at least one part of the structure that is both substantially opaque to the naked eye and substantially transparent to light is transparent to visible light, the light-curable adhesive is curable by visible light, and the transmitted light is visible light.

In accordance with an additional mode of the disclosure, the at least one part of the structure that is both substantially opaque to the naked eye and substantially transparent to light is comprised of a transparent polymeric material.

In accordance with yet another mode of the disclosure, there is provided the step of adding at least one of a light-transmissive agent to the transparent polymeric material to cause the transparent polymeric material to have an opaque appearance to the naked eye and a diffusing agent to the transparent polymeric material to disperse the transmitted light along the contact surface for curing the light-curable adhesive.

In accordance with yet a further mode of the disclosure, after the applying step and before the transmitting step, forming a closed enclosure by placing the at least two adjacent parts of the structure together at the contact surface.

In accordance with yet an added mode of the disclosure, the structure further comprises a band comprised of a material that is substantially transparent to light, the band being disposed between the at least first and second housing portions at the contact surface to form an enclosure together with the first and second housing portions.

In accordance with yet an additional mode of the disclosure, the light cures the light-curable adhesive by being transmitted through the band.

In accordance with again another mode of the disclosure, the band is transparent to ultraviolet light, the light-curable adhesive is curable by ultraviolet light, and the transmitted light is ultraviolet light.

In accordance with again a further mode of the disclosure, the band is transparent to visible light, the light-curable adhesive is curable by visible light, and the transmitted light is visible light.

In accordance with again an added mode of the disclosure, the band appears substantially opaque to the naked eye.

In accordance with again an additional mode of the disclosure, there is provided the step of adding at least one of a light-transmissive agent to the band to cause it to have an opaque appearance to the naked eye and a diffusing agent to the band to disperse the transmitted light along the at least one contact surface for curing the light-curable adhesive.

In accordance with still another mode of the invention, there are provided the steps of providing a battery assembly inside the enclosure and electrically coupling the battery assembly to the at least one light source for powering the at least one light source.

In accordance with still a further mode of the invention, a circuit board is provided within the enclosure and the at least one light source is disposed on the circuit board, the circuit board being operable to cause the at least one light source to transmit the light sufficient to cure the light-curable adhesive.

In accordance with still an added mode of the invention, the at least one light source is at least one ultraviolet light source and the light-curable adhesive is curable by ultraviolet light. The at least one light source is a plurality of ultraviolet light-emitting diodes.

In accordance with still an additional mode of the invention, the at least one light source is at least one visible light source and the light-curable adhesive is curable by visible light.

Although the invention is illustrated and described herein as embodied in a sealed device and method of sealing, it is, nevertheless, not intended to be limited to the details shown because various modifications and structural changes may be made therein without departing from the spirit of the invention and within the scope and range of equivalents of the claims. Additionally, well-known elements of exemplary embodiments of the invention will not be described in detail or will be omitted so as not to obscure the relevant details of the invention.

The features that are considered as characteristic for the invention are set forth in the appended claims.

### BRIEF DESCRIPTION OF THE DRAWINGS

The accompanying figures, where like reference numerals refer to identical or functionally similar elements throughout the separate views, which are not true to scale, and which, together with the detailed description bellow, are incorporated in and form part of the specification, serve to illustrate further various embodiments and to explain various principles and advantages all in accordance with the present invention. Advantages of embodiments of the present invention will be apparent from the following detailed description of the exemplary embodiments thereof, which description should be considered in conjunction with the accompanying drawings in which:
FIG. 1 is a fragmentary, left side elevational view of a surgical device having a battery assembly according to an exemplary embodiment of the invention;
FIG. 2 is a perspective view from above the front of the battery assembly of FIG. 1;
FIG. 3 is a fragmentary, perspective view of a battery assembly sealed in accordance with an exemplary embodiment of the present invention;
FIG. 4 is fragmentary, perspective view of a battery assembly sealed in accordance with another exemplary embodiment of the present invention;
FIG. 5 is a fragmentary perspective view of an exemplary embodiment of internal components within the battery assembly of FIG. 2;
FIG. 6 is a side perspective view of a transducer-and-generator assembly of the device of FIG. 1; and
FIG. 7 is a side perspective view of another exemplary embodiment of a transducer-and-generator assembly in accordance with the present invention.

### DETAILED DESCRIPTION OF THE INVENTION

As required, detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. Further, the terms and phrases used herein are not intended to be limiting; but rather, to provide an understandable description of the invention. While the specification concludes with claims defining the features of the invention that are regarded as novel, it is believed that the invention will be better understood from a consideration of the following description in conjunction with the drawing figures, in which like reference numerals are carried forward.

Before the present invention is disclosed and described, it is to be understood that the terminology used herein is for the purpose of describing particular embodiments only and is not intended to be limiting. The terms "a" or "an", as used herein, are defined as one or more than one. The term "plurality," as used herein, is defined as two or more than two. The term "another" as used herein, is defined as at least a second or more. The terms "including" and/or "having," as used herein, are defined as comprising (i.e., open language), The term "coupled," as used herein, is defined as connected, although not necessarily directly, and not necessarily mechanically.

Relational terms such as first and second, top and bottom, and the like may be used solely to distinguish one entity or action from another entity or action without necessarily requiring or implying any actual such relationship or order between such entities or actions. The terms "comprises," "comprising," or any other variation thereof are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

As used herein, the term "about" or "approximately" applies to all numeric values, whether or not explicitly indicated. These terms generally refer to a range of numbers that one of skill in the art would consider equivalent to the recited values (i.e., having the same function or result). In many instances these terms may include numbers that are rounded to the nearest significant figure.

Herein various embodiments of the present invention are described. In many of the different embodiments, features are similar. Therefore, to avoid redundancy, repetitive description of these similar features may not be made in some circumstances. It shall be understood, however, that description of a first-appearing feature applies to the later described similar feature and each respective description, therefore, is to be incorporated therein without such repetition.

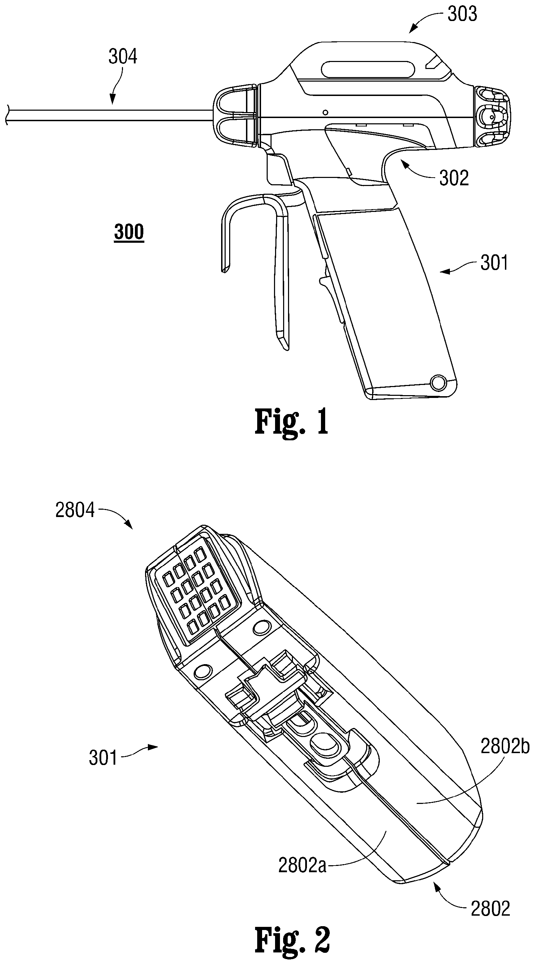

Referring now to the figures of the drawings in detail and first, particularly to FIG. 1, there is shown a first exemplary embodiment of a cordless surgical assembly 300, which is described in detail in U.S. Provisional Patent Application Serial Nos. 61/376,983 and 61/476,022. The assembly 300 includes three main component parts: (1) a battery assembly 301; (2) a handle assembly 302 with an ultrasonic-cutting-blade-and-waveguide assembly 304; and (3) a transducer-and-generator ("TAG") assembly 303.

FIG. 2 shows the fully assembled battery assembly 301, which has been ultrasonically welded so that the two halves 2802a and 2802b of the outer shell 2802, as well as the potted multi-lead battery terminal assembly 2804, provide a hermetic seal between the environment and the interior of the battery assembly 301. Exemplary embodiments of the present invention provide inventive methods for sealing multi-part housings of similar battery and TAG assemblies. However, it is to be understood that the disclosed embodiments are merely exemplary of the invention, which can be embodied in various devices having a mechanical housing or enclosure formed from two or more parts attached together to enclose therein various mechanical or electrical components. Some exemplary devices include laparoscopic cameras, rigid endoscopes, and other enclosure devices or devices that are not necessarily enclosure devices, e.g., laparoscopic or other mechanical hand tools.

A "hermetic" seal, as used herein, indicates a seal that sufficiently isolates a compartment (e.g., an interior of a shell) and components disposed therein from a sterile field of an operating environment into which the device has been introduced so that no contaminants from one side of the seal are able to transfer to the other side of the seal. This seal is at least gas-tight, thereby preventing intrusion of air, water, vapor phase H₂O₂, etc. Upon initial assembly, room air will be trapped in the enclosure with whatever moisture is present. This can easily be more moisture than is desirable in an electronics enclosure. Therefore, in an exemplary embodiment, inclusion of a desiccant system inside the enclosure is desirable and can serve two purposes. A primary purpose is to absorb any moisture that may ingress over the life of the device, but, if sized appropriately, the desiccant system will also serve to absorb any moisture that is trapped during assembly. Use of the desiccant system, therefore, simplifies assembly and eliminates the need to close the enclosure under any special environments.

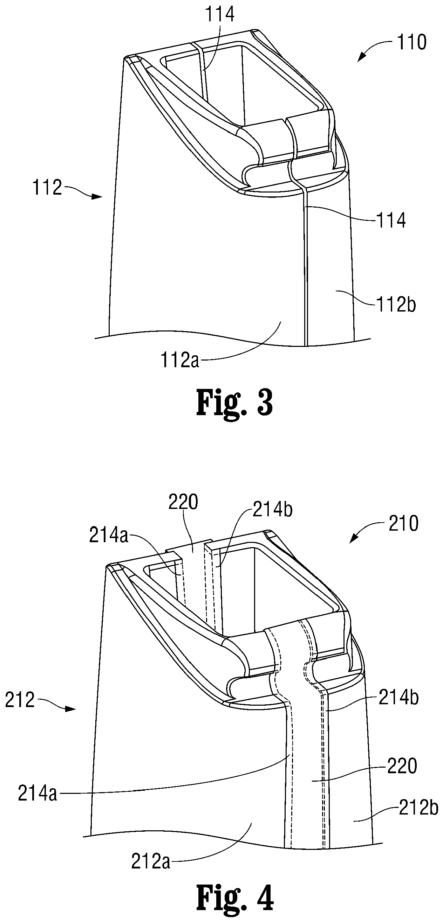

Described now are exemplary embodiments of the present invention. Referring to **FIG. 3****,** an exemplary battery assembly **110** is provided. The battery assembly **110** includes an outer shell or housing **112** comprising a first portion **112a** and a second portion **112b.** In this exemplary embodiment, the first and second portions **112a** and **112b** are first and second halves of the outer shell or housing **112.** However, there is no requirement that the housing **112** be provided in two halves. In fact, the housing **112** may be comprised of more than two sub-parts of differing portions. The first and second housing portions **112a** and **112b** are attached together to enclose therein mechanical and electrical components (not shown) that allow the device, to which the battery assembly **110** supplies power, to function. An ultraviolet (UV) light-curable or visible-light curable adhesive is used to attach the housing portions **112a, 112b** together. In this exemplary embodiment, the first and second housing portions **112a, 112b** have a contact surface 114 therebetween and the adhesive is applied at one or both opposing sides of the contact surface **114** to provide a hermetic seal between first and second housing portions **112a** and **112b.** Given the location of the adhesive, the adhesive is not easily depicted in the drawings and, therefore, it is not shown. However, one of ordinary skill in the art would appreciate that the adhesive is disposed between the first and second housing portions **112a** and **112b** along the contact surface **114** therebetween.

In this exemplary configuration, each of the first and second housing portions **112a** and **112b** is formed from a material that appears opaque to the naked eye, but is light transparent. In other words, the housing **112** is transmissive to light to allow for curing of the adhesive to seal the two housing portions **112a, 112b** together, but it is not transmissive enough to allow visibility by the naked eye therethrough. For purposes of the present application and the claims set forth below, the terms "substantially opaque" and "substantially transparent" are respectively defined as characterizing a material that appears opaque to the naked eye, and yet, allows at least a portion of the light spectrum to be transmitted therethrough. Thus, in this exemplary embodiment, UV light (having a wavelength between about 320 and about 390 nm) or visible light (having a wavelength between about 435 and about 500 nm) is transmitted through the housing portions **112a, 112b** in order to cure the adhesive and seal the housing portions **112a, 112b** together.

**FIG. 4** illustrates another exemplary battery assembly **210,** which is similar to the battery assembly **110** of FIG. 3 and, therefore, similar reference numbers increased by **100** refer to similar parts. The battery assembly **210,** however, includes a spacer band 220 disposed between the first and second housing portions **212a** and 212b. A light-curable adhesive is used to attach the housing portions **212a, 212b** and the band 220 together. In this exemplary embodiment, the first housing portion **212a** and the band **220** have a contact surface **214a** therebetween, and the second housing portion **212b** and the band **220** have a contact surface **214b** therebetween. The adhesive is applied at the contact surfaces **214a, 214b** to provide a hermetic seal between the three parts **212a, 212b, 220** to collectively form the housing **212** in FIG. 4. Given the location of the adhesive, it is not easily depicted in the drawings and, therefore, is not shown. However, one of ordinary skill in the art would appreciate that the adhesive is disposed between the first and second housing portions **212a** and **212b** and the band 220 along the contact surfaces **214a, 214b** therebetween.

In this exemplary configuration, the band **220** is formed from a material that is light transparent to allow for curing of the adhesive to seal the two housing portions **212a, 212b** and the band **220** together. The material may be the same as that used to make the housing portions **112a, 112b** of FIG. 3, i.e., visibly opaque but transmissive to light. Alternatively, since the band **220** makes up a much smaller portion of the housing **212** relative to the first and second portions **212a, 212b,** the band **220** may be formed of a material that is both light transparent and visibly transparent. In such configuration, most of the components enclosed within the interior of the housing **212** would remain substantially concealed by the housing portions **212a, 212b.**

The housing portions **212a, 212b** of FIG. 4 may or may not be formed of the same material as the housing portions **112a, 112b** in FIG. 3. In other words, it is not necessary for the housing portions **212a, 212b** to be light transparent in this exemplary embodiment because light is already able to transmit through the band **220** to cure the adhesive. Thus, in the exemplary configuration of FIG. 4, UV light (having a wavelength between about 320 and about 390 nm) or visible light (having a wavelength between about 435 and about 500 nm) is transmitted through the transmissive band **220** to cure the adhesive and seal the housing portions 212a, 212b together, but the housing portions **212a, 212b** need not be transparent to this light. Fillers for modifying properties of the housing portions, e.g., lubricity, stiffness, flame rating, RF blocking, can be used to create the opacity.

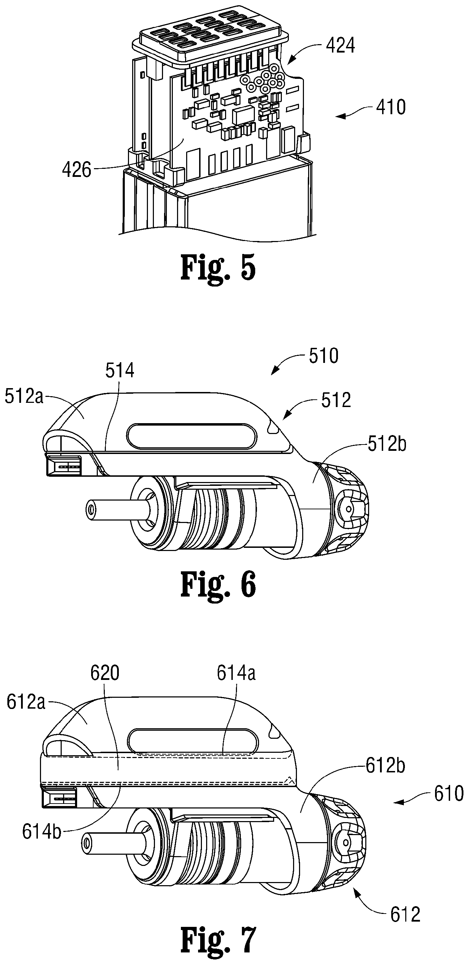

**FIG. 5** illustrates an exemplary configuration of internal components of a battery assembly **410.** In this exemplary embodiment, the housing is not shown but may be similar to either of the housings **112, 212** in FIGS. 3 or 4. The material from which the housing is made is not relevant for purposes of curing the adhesive, whether it be visibly opaque, but transmissive to light, or entirely non-transmissive to light in this exemplary embodiment. This is because the light curable adhesive, in this exemplary configuration, is cured from the inside of the housing to provide a hermetic seal between the housing portions. For example, a plurality of light emitting diodes (LEDs) **424,** may be disposed on one or more of the circuit boards **426** housed within the interior of the housing. Such LEDs are operable to transmit UV light (with a wavelength between about 320 and about 390 nm) or visible light (with a wavelength between about 435 and about 500 nm) sufficient to cure the adhesive and seal the housing portions together. The curing, i.e., operation of the LEDs, may occur, for example, during the manufacturing process. In an exemplary configuration, the LEDs can be disposed around an edge of the circuit board to illuminate evenly across the entire joint. When cured during the manufacturing process, the manufacturer is able to test the viability of the seal prior to shipment of the manufactured device.

Referring now to **FIGS. 6** and **7****,** additional embodiments depicting exemplary sealed devices and exemplary sealing methods are shown, this time using a transducer-and-generator ("TAG") assembly similar to the TAG assembly **303** within the device shown in FIG. 1. The exemplary embodiment of the TAG assembly **510** in FIG. 6 has a two-part housing **512,** including first and second housing portions **512a, 512b,** attached together to enclose therein mechanical and electrical components (not shown). A UV or visible light-curable adhesive is used to attach the housing portions **512a, 512b** together. In this exemplary embodiment, the first and second housing portions **512a, 512b** have a contact surface **514** therebetween, and the adhesive is applied at the contact surface **514** to provide a hermetic seal between the first and second housing portions **512a, 512b.** Given the location of the adhesive, it is not easily depicted in the drawings and is, therefore, not shown. However, one of ordinary skill in the art would appreciate that the adhesive is disposed between the first and second housing portions **512a** and **512b** along at least one half of the contact surface **514** therebetween.

In this exemplary embodiment, each of the first and second housing portions **512a, 512b** is formed from a material that appears opaque, but is light transparent. In other words, at least a portion of the housing **512 is** transmissive to light to allow for curing of the adhesive to seal the two housing portions **512a, 512b** together, but it is not transmissive enough to allow visibility therethrough. Thus, in this exemplary embodiment, UV light (having a wavelength between about 320 and about 390 nm) or visible light (having a wavelength between about 435 and about 500 nm) is transmitted through the housing portions **512a, 512b** to cure the adhesive and seal the housing portions **512a, 512b** together.

In **FIG. 7****,** the TAG assembly **610** is similar to the TAG assembly **510** of FIG. 6, wherein similar reference numbers increased by **100** refer to similar parts. The TAG assembly **610** includes a spacer band **620** disposed between the first and second housing portions **612a** and **612b.** A light-curable adhesive is used to attach the housing portions **612a, 612b** and the band **620** together. In this exemplary embodiment, the first housing portion **612a** and the band **620** have a contact surface **614a** therebetween, and the second housing portion **612b** and the band **620** have a contact surface **614b** therebetween. The adhesive is applied at the contact surfaces **614a, 614b** to provide a hermetic seal between the three parts **612a, 612b, 620** to collectively form the housing **612** in FIG. 7. Given the location of the adhesive, it is not easily depicted in the drawings and is, therefore, not shown. However, one of ordinary skill in the art would appreciate that the adhesive is disposed between the first and second housing portions **612a** and **612b** and the band **620** along the contact surfaces **614a, 614b** therebetween.

In this exemplary configuration, the band **620** is formed from a material that is light transparent to allow for curing of the adhesive to seal the two housing portions **612a, 612b** and the band **620** together. The material may be the same as that used to make the housing portions **512a, 512b** of FIG.6, i.e., visibly opaque but transmissive to light. Alternatively, since the band **620** makes up a much smaller portion of the housing **612** relative to the first and second portions **612a, 612b,** the band **620** may be formed of a material that is both light transparent and visibly transparent. In such configuration, most of the components enclosed within the interior of the housing **612** would remain substantially concealed by the housing portions **612a, 612b.**

The housing portions **612a, 612b** of FIG. 7 may or may not be formed of the same material as the housing portions **512a, 512b** in FIG. 6. In other words, it is not necessary for the housing portions **612a, 612b** to be light transparent in this exemplary embodiment because light is already able to transmit through the band **620** to cure the adhesive. Thus, in the exemplary configuration of FIG. 7, UV light (having a wavelength between about 320 and about 390 nm) or visible light (having a wavelength between about 435 and about 500 nm) is transmitted through the transmissive band **620** to cure the adhesive and seal the housing portions **612a, 612b** together.

In another exemplary embodiment, a TAG assembly may include a two-part housing that is sealed by a light-curable adhesive that is cured from within the housing. For example, the housing may include one or more circuit boards enclosed therein with one or more UV LEDs disposed thereon and operable to transmit UV light (with a wavelength between about 320 and about 390 nm) or visible light (a wavelength between about 435 and about 500 nm) sufficient to cure the adhesive and provide a hermetic seal between the housing sub-parts. In this exemplary configuration, the material from which the housing is made is not relevant for purposes of curing the adhesive, whether it be visibly opaque but transmissive to light or entirely non-transmissive to light.

It is noted that the above variations in the battery assemblies can be equally applied to the TAG assembly and, therefore, they are repeated in their entirety herein.

To make any of the housing portions **112a, 112b, 212a, 212b, 512a, 512b, 612a, 612b, 2802a, 2802b** substantially opaque as described herein, colorants can be used to block visible light but allow UV light to pass.

In one exemplary embodiment, where the housings **112, 212, 512, 612, 2802** and bands **220, 620** are light transmissive, but appear opaque to the naked eye, the material from which the housing portions **112a, 112b, 212a, 212b, 512a, 512b, 612a, 612b, 2802a, 2802b** and bands **220, 620** are formed includes a transparent polymer, e.g., polycarbonate, polysulfone, acrylic, polyethylene terephthalate (PET), or transparent nylons. Tinting agents, diffusing agents, or other filler materials, e.g., any combination of glass, minerals, mica, and talc, are added to the transparent polymer to create a cloudy opaque appearance, yet maintain the ability to transmit UV or visible light therethrough. Diffusing agents added to the polymer material may also serve as a light guide to help disperse the light during curing of the light-curable adhesive.

For example, in accordance with the principles of the present invention, housing portions **112a, 112b, 212a, 212b, 512a, 512b, 612a, 612b, 2802a, 2802b** and bands **220, 620** may be comprised of a transparent polycarbonate material that has been subsequently tinted with a tint based on a particular PANTONE® color number. In addition, a diffusing agent having Carbon Black among its constituents could be subsequently added to the polycarbonate base material.

The light-curable adhesive is a UV or visible light curable adhesive, e.g., DYMAX®, LOCTITE®, or any other suitable light-curable adhesive known by one of ordinary skill in the art. The light-curable adhesive provides advantages over other adhesives, e.g., two-part epoxy/urethane adhesives, which release free gases that corrode or degrade the polymer of the housing or circuits contained therein. This is especially advantageous for battery assemblies, in which outgassing from an epoxy adhesive, for example, cannot truly be evacuated because subjecting the battery cells to vacuum - to evacuate the outgases from within the battery assembly housing - can degrade or destroy the battery cells.

In an exemplary embodiment, the band **220, 620** includes texturizing or lensing (e.g., Fresnel shaping) on an interior surface thereof, which helps reflect the light in all directions within the battery assembly 210 or TAG assembly **610.**

In another exemplary embodiment, the band **220, 620** includes tongues configured to mate with corresponding grooves formed in the first and second housing portions **212a, 612a** and **212b, 612b** (i.e., tongue-in-groove connections) to secure the band **220, 620** to the first and second housing portions. In such another exemplary embodiment, the groove edges and/or the tongue (configured to be disposed in the grooves), or any of the housing interior surfaces, can be selectively transparent and/or mirrored so that the curing light reflects and bounces around inside the groove or the housing to enhance curing.

In another exemplary embodiment, the adhesive effect is improved by using an inert cover gas that does not react with the photoinitiators in the adhesive. For example, the curing may occur in a nitrogen gas environment containing as little oxygen as possible.

In another exemplary embodiment, a manufacturing process uses narrow-band light filters to block curing wavelengths of light, but allows non-reactive visible wavelengths of light, in order to inspect parts that are about to be cured.

In yet another exemplary embodiment, a lower intensity reactive visible light may be used to cause a slower cure through a thicker section allowing adhesion at the surface between the adhesive and the substrate before shrinkage of the adhesive can cause delamination from the substrate.

If the interior surfaces of the housing parts are painted, and the area of the joint is outside of the opaque, painted boundary, then the outside area can be exposed to UV light for curing.

The foregoing description and accompanying drawings illustrate the principles, exemplary embodiments, and modes of operation of the invention. However, the invention shall not be construed as being limited to the particular embodiments discussed above. Additional variations of the embodiments discussed above will be appreciated by those skilled in the art and the above-described embodiments shall be regarded as illustrative rather than restrictive. Accordingly, it shall be appreciated that variations to those embodiments can be made by those skilled in the art without departing from the scope of the invention as defined by the following claims.

Accordingly the invention also relates to a method for creating a sealed device including the steps of providing a structure comprised of at least two adjacent parts forming an enclosure and having a contact surface therebetween. At least one part of the structure can be comprised of a material that appears substantially opaque to the naked eye and is substantially transparent to light. A light-curable adhesive can be applied at the contact surface, and light can be transmitted to cure the light-curable adhesive to form a hermetic seal at the contact surface between the at least two adjacent parts.

## Claims

1. Method for creating a seal, comprising:
providing a multi-part structure comprised of adjacent parts (112a, 112b; 512a, 512b) that form a housing (112; 512) and have a contact surface (114; 514) therebetween;
disposing at least one light source (424) inside the housing (112; 512);
applying a light-curable adhesive at the contact surface (114; 514); and
powering the at least one light source to transmit light sufficient to cure the light-curable adhesive from inside the housing (112; 512) and, thereby, form a hermetic seal at the contact surface (114; 514) between the adjacent parts.

2. Method according to claim 1, wherein the structure is comprised of a material that is substantially non-transmissive to light.

3. Method according to claim 1, wherein the structure is comprised of a material that is substantially transparent to light.

4. Method according to any of the preceding claims, wherein the structure is comprised of a material that appears substantially opaque to the naked eye.

5. Method according to any of the preceding claims, further comprising:
providing a battery assembly (410) inside the housing (112; 512); and
electrically coupling the battery assembly (410) to the at least one light source (424) for powering the at least one light source (424).

6. Method according to any of the preceding claims, further comprising:
providing a circuit board (426) within the housing (112; 512); and
disposing the at least one light source (424) on the circuit board (426), the circuit board (426) being operable to cause the at least one light source (424) to transmit light sufficient to cure the light-curable adhesive.

7. Method according to any of the preceding claims, wherein the at least one light source (424) is at least one ultraviolet light source; and the light-curable adhesive is curable by ultraviolet light.

8. Method according to any of the preceding claims, wherein the at least one light source (424) is a plurality of ultraviolet light-emitting diodes; and the light-curable adhesive is curable by ultraviolet light.

9. Method according to any of the preceding claims, wherein the at least one light source (424) is at least one visible light source; and the light-curable adhesive is curable by visible light.

10. Method according to any of the preceding claims, wherein the structure further comprises a band disposed between at least two adjacent parts (112a, 112b; 512a, 512b) at the contact surface to form the housing together with the at least two adjacent parts, the band has a textured interior surface such that light transmitted from the at least one light source (424) reflects off the interior surface and within the housing to enhance curing of the light-curable adhesive.

11. Method according to any of the preceding claims, wherein at least one of the adjacent parts (112a, 112b; 512a, 512b) has a mirrored interior surface such that light transmitted from the at least one light source (424) reflects off the interior surface and within the housing to enhance curing of the light-curable adhesive.

12. Method according to any of the preceding claims, wherein the band has a lensed interior surface such that light transmitted from the at least one light source (424) reflects off the interior surface and within the housing to enhance curing of the light-curable adhesive.

## Patentansprüche

1. Verfahren zum Erzeugen einer Dichtung, umfassend:
- Vorsehen einer mehrteiligen Struktur, die aneinandergrenzende Teile (112a, 112b; 512a, 512b) umfasst, die ein Gehäuse (112; 512) bilden und eine dazwischenliegende Kontaktfläche (114; 514) aufweisen;
- Anordnen von mindestens einer Lichtquelle (424) in dem Gehäuse (112; 512);
- Auftragen eines lichthärtbaren Klebstoffs an der Kontaktfläche (114; 514); und
- Versorgen der mindestens einen Lichtquelle mit Strom, um Licht zu übertragen, das ausreicht, den lichthärtbaren Klebstoff von innerhalb des Gehäuses (112; 512) auszuhärten und dadurch eine hermetische Dichtung an der Kontaktfläche (114; 514) zwischen den aneinandergrenzenden Teilen zu auszubilden.

2. Verfahren nach Anspruch 1, wobei die Struktur aus einem Material besteht, das im Wesentlichen undurchlässig für Licht ist.

3. Verfahren nach Anspruch 1, wobei die Struktur aus einem Material besteht, das im Wesentlichen transparent für Licht ist.

4. Verfahren gemäß einem der vorhergehenden Ansprüche, wobei die Struktur aus einem Material besteht, das für das bloße Auge im Wesentlichen undurchsichtig ist.

5. Verfahren nach einem der vorhergehenden Ansprüche, ferner umfassend:
- Bereitstellen einer Batterieanordnung (410) innerhalb des Gehäuses (112; 512); und
- elektrisches Koppeln der Batterieanordnung (410) an die mindestens eine Lichtquelle (424) zum Versorgen der mindestens einen Lichtquelle (424) mit Strom.

6. Verfahren nach einem der vorhergehenden Ansprüche, ferner umfassend:
- Bereitstellen einer Leiterplatte (426) innerhalb des Gehäuses (112; 512); und
- Anordnen der mindestens einen Lichtquelle (424) auf der Leiterplatte (426), wobei die Leiterplatte (426) betreibbar ist, die mindestens eine Lichtquelle (424) zu veranlassen, Licht zu übertragen, das ausreichend ist, um den lichthärtbaren Klebstoff auszuhärten.

7. Verfahren nach einem der vorhergehenden Ansprüche, wobei die mindestens eine Lichtquelle (424) mindestens eine Quelle für ultraviolettes Licht ist; und der lichthärtbare Klebstoff durch ultraviolettes Licht aushärtbar ist.

8. Verfahren nach einem der vorhergehenden Ansprüche, wobei die mindestens eine Lichtquelle (424) eine Mehrzahl von ultraviolettes Licht emittierenden Dioden ist; und der lichthärtbare Klebstoff durch ultraviolettes Licht aushärtbar ist.

9. Verfahren nach einem der vorhergehenden Ansprüche, wobei die mindestens eine Lichtquelle (424) mindestens eine Quelle für sichtbares Licht ist; und der lichthärtbare Klebstoff durch sichtbares Licht aushärtbar ist.

10. Verfahren nach einem der vorhergehenden Ansprüche, wobei die Struktur ferner ein Band aufweist, das zwischen mindestens zwei aneinandergrenzenden Teilen (112a, 112b; 512a, 512b) an der Kontaktfläche angeordnet ist, um zusammen mit den mindestens zwei aneinandergrenzenden Teilen das Gehäuse zu bilden, wobei das Band eine strukturierte innere Fläche derart aufweist, dass Licht, das von der mindestens einen Lichtquelle (424) ausgestrahlt wird, von der inneren Fläche und innerhalb des Gehäuses reflektiert wird, um das Aushärten des lichthärtbaren Klebstoffs zu erhöhen.

11. Verfahren nach einem der vorhergehenden Ansprüche, wobei mindestens eines der aneinandergrenzenden Teile (112a, 112b; 512a, 512b) eine verspiegelte innere Fläche derart aufweist, dass Licht, das von der mindestens einen Lichtquelle (424) ausgestrahlt wird, von der inneren Fläche und innerhalb des Gehäuses reflektiert wird, um das Aushärten des lichthärtbaren Klebstoffs zu erhöhen.

12. Verfahren nach einem der vorhergehenden Ansprüche, wobei das Band eine mit Linsen versehene innere Fläche derart aufweist, dass Licht, das von der mindestens einen Lichtquelle (424) ausgestrahlt wird, von der inneren Fläche und innerhalb des Gehäuses reflektiert wird, um das Aushärten des lichthärtbaren Klebstoffs zu erhöhen.

## Revendications

1. Procédé de création d'un joint étanche, comprenant :
la fourniture d'une structure à parties multiples constituée de parties adjacentes (112a, 112b; 512a, 512b) qui forment un boîtier (112 ; 512) et ont une surface de contact (114; 514) entre elles ;
la disposition au moins d'une source de lumière (424) à l'intérieur du boîtier (112 ; 512) ;
l'application d'un adhésif photodurcissable à la surface de contact (114 ; 514) ; et
la commande de la au moins une source de lumière pour transmettre de la lumière à suffisance pour durcir l'adhésif photodurcissable de l'intérieur du boîtier (112; 512) et former de la sorte un joint étanche hermétique à la surface de contact (114 ; 514) entre les parties adjacentes.

2. Procédé selon la revendication 1, dans lequel la structure est constituée d'un matériau qui ne laisse sensiblement pas passer la lumière.

3. Procédé selon la revendication 1, dans lequel la structure est constituée d'un matériau qui est sensiblement transparent à la lumière.

4. Procédé selon l'une quelconque des revendications précédentes, dans lequel la structure est constituée d'un matériau qui apparaît sensiblement opaque à l'oeil nu.

5. Procédé selon l'une quelconque des revendications précédentes, comprenant en outre :
la fourniture d'un ensemble de piles (410) à l'intérieur du boîtier (112 ; 512) ; et
le couplage électrique de l'ensemble de piles (410) à la au moins une source de lumière (424) pour commander la au moins une source de lumière (424).

6. Procédé selon l'une quelconque des revendications précédentes, comprenant en outre :
la fourniture d'une carte de circuit (426) dans le boîtier (112 ; 512) ; et
la disposition de la au moins une source de lumière (424) sur la carte de circuit (426), la carte de circuit (426) étant à même d'amener la au moins une source de lumière (424) à transmettre de la lumière à suffisance pour durcir l'adhésif photodurcissable.

7. Procédé selon l'une quelconque des revendications précédentes, dans lequel la au moins une source de lumière (424) est au moins une source de lumière ultraviolette ; et l'adhésif photodurcissable est durcissable par la lumière ultraviolette.

8. Procédé selon l'une quelconque des revendications précédentes, dans lequel la au moins une source de lumière (424) est une pluralité de diodes électroluminescentes ultraviolettes ; et l'adhésif photodurcissable est durcissable par la lumière ultraviolette.

9. Procédé selon l'une quelconque des revendications précédentes, dans lequel la au moins une source de lumière (424) est au moins une source de lumière visible ; et l'adhésif photodurcissable est durcissable par la lumière visible.

10. Procédé selon l'une quelconque des revendications précédentes, dans lequel la structure comprend en outre une bande disposée entre au moins deux parties adjacentes (112a, 112b ; 512a, 512b) à la surface de contact pour former le boîtier conjointement aux les au moins deux parties adjacentes, la bande a une surface intérieure texturée de sorte que la lumière transmise par la au moins une source de lumière (424) se réfléchisse sur la surface intérieure et dans le boîtier afin de renforcer le durcissement de l'adhésif photodurcissable.

11. Procédé selon l'une quelconque des revendications précédentes, dans lequel au moins l'une des parties adjacentes (112a, 112b ; 512a, 512b) a une surface intérieure symétrique de sorte que la lumière transmise par la au moins une source de lumière (424) se réfléchisse sur la surface intérieure et dans le boîtier afin de renforcer le durcissement de l'adhésif photodurcissable.

12. Procédé selon l'une quelconque des revendications précédentes, dans lequel la bande a une surface intérieure à lentille de sorte que la lumière transmise par la au moins une source de lumière (424) se réfléchisse sur la surface intérieure et dans le boîtier pour renforcer le durcissement de l'adhésif photodurcissable.
